# EUROPEAN PATENT APPLICATION

(11) **EP 1 847 488 A1**
(43) Date of publication of application: **24.10.2007**
(21) Application number: 07103089.4
(22) Date of filing: 27.02.2007
(51) Int. Cl.: B65G 47/82, B65G 47/08, B65G 47/31

(54) **An ordering machine**

(30) Priority: 21.04.2006 IT RE20060051
(71) Applicant: Costi S.r.l., 41040 Fiorano Modenese (Modena) (IT)
(72) Inventor: Costi, Silvano Costi S.R.L., 41040 Fiorano Modenese (Modena) (IT)
(74) Representative: Corradini, Corrado

(57) **Abstract**

An ordering machine for ordering a group of homogeneous objects (V) in a matrix arrangement, comprising: a first mobile plane (20) for supplying in sequence the group of objects (V) onto a second mobile plane (30) which moves at a different velocity from the first plane and supports a line of the objects (V) in a transfer zone, and a pusher organ (5), mobile and alternating in a perpendicular direction to the advancement direction (A) of the second mobile plane (30), which contemporaneously pushes all the objects (V) of the line onto a third mobile plane (40) which slides in a perpendicular direction (B) to the advancement direction (A) of the second mobile plane (30).

## Description

The invention relates to an ordering machine for homogeneous objects, usually of small dimensions, such as for example jars of food products.

In more detail the invention relates to an ordering machine mainly destined to be inserted in an automatic packing line, to prepare the objects for a subsequent transfer, for example internally of special storage container.

As is known, jars of food products are usually packed internally of large storage containers, where they are arranged in overlying layers up until the container is full.

Each layer is constituted by a group of coplanar jars which are ordered in a matrix fashion, i.e. in a plurality of parallel equidistanced lines, each of which is formed by a group of jars, also equidistanced.

Normally the transfer of the jars internally of the storage containers is done by a transporter device, which removes an entire layer of jars previously ordered on a service plane and moves them rigidly in order to deposit them above the topmost layer of jars, previously located internally of the container.

This leads to the need to provide an ordering machine, insertable in the packing line of the jars, upstream of the transporter device, which ordering device is able to prepare and automatically order a predetermined group of jars in a desired matrix-type arrangement.

The aim of the present invention is to respond to the above need, by providing a simple, rational and inexpensive solution.

The aim is attained by the invention, as it is characterised in the claims that follow.

In particular, the aim is attained by an ordering machine for homogeneous objects, such as jars of food products, which comprises:
a first mobile plane for supplying a group of objects in a sequence onto a second mobile plane which moves at a different velocity from the first mobile plane and supports a line of the objects in a transfer zone, and
a pusher organ, mobile and alternating in a perpendicular direction to the advancement direction of the second mobile plane, which contemporaneously pushes all the objects of the line onto
a third mobile plane which moves in a perpendicular direction to the advancement direction of the second mobile plane.

Thanks to this solution, during the passage thereof from the first to the second mobile plane, the objects to be ordered are arranged in an aligned fashion in which they are distance by a predetermined quantity.

Thus, each time a descretely numbered line of the objects occupies the transfer zone, the line is wholly transferred onto the third mobile plane.

In this way, an ordered succession of parallel lines of objects is progressively located on the third mobile plane, which line of objects is overall distributed in the desired matrix arrangement.

Preferably the first and second mobile planes are coplanar and slide in the same advancement direction.

The second mobile plane is further preferably superposed on the third mobile plane, in direct contact therewith, at the transfer zone.

In a preferred embodiment of the invention, the pusher organ comprises a series of housings, each of which partially embraces a respective object of the line of objects located in the transfer zone.

In this way, during the transfer onto the third mobile plane, the housings prevent the objects in the line from displacing among themselves, ensuring that they become placed at the precise reciprocal distance required by the matrix.

Further characteristics and advantages of the invention will better emerge from a reading of the following description, provided by way of non-limiting example, with the aid of the figures illustrated in the enclosed tables of drawings, in which:
Figure 1 is a plan view of an ordering machine of the invention, in which the pusher organ is shown in two distinct operative positions;
Figure 2 is the section along line II-II of figure 1, in which the pusher organ is shown in three distinct operative positions;
Figure 3 is the section along line III-III of figure 2;
Figure 4 is an enlarged detail of figure 2;
Figure 5 is an enlarged detail of figure 3.

The figures illustrate an ordering machine 1 for homogeneous objects and, in the illustrated embodiment, for jars V of food product.

In particular, the machine 1 predisposes a group of the jars V on a same horizontal service plane 40, ordering them according to a predetermined matrix arrangement.

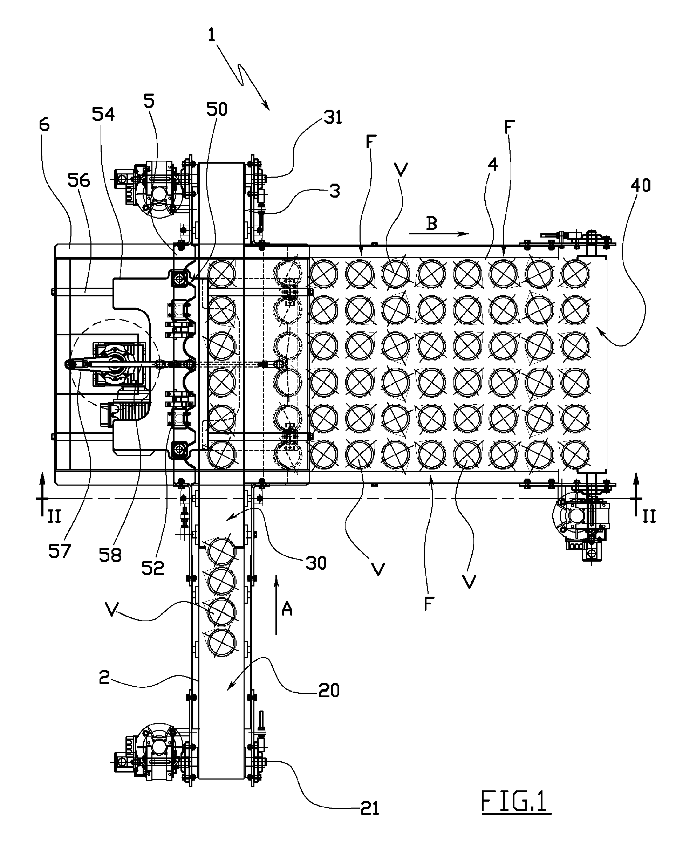

As illustrated in figure 1, by the expression matrix arrangement it is meant that the jars V are ordered in a plurality of parallel lines F, regularly distanced, in which each line F comprises a group of jars V which are aligned and regularly distanced.

In the illustrated embodiment, the jars V of each single line F are separated by a constant distance which is equal to the distance separating two contiguous parallel lines F, so that each jar V located on the service plane 40 is equidistant from all the jars adjacent thereto.

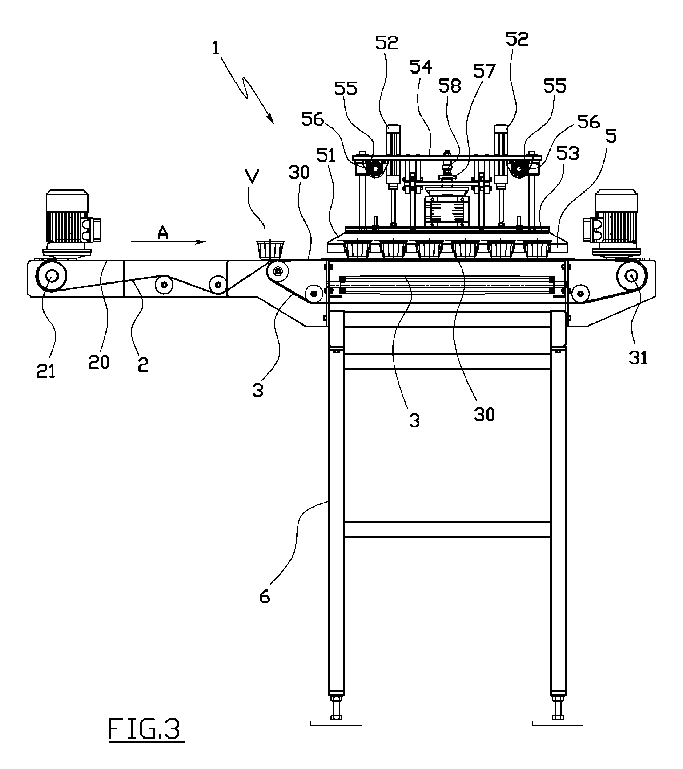

As shown in figure 3, the ordering machine 1 comprises a support frame 6 which is stably rested on the ground, and which supports all the operative devices of the machine 1.

A first conveyor belt 2 for infeeding jars V is installed on the support frame 6, which first conveyor belt 2 provides a horizontal plane 20, mobile in a predetermined advancement direction A.

In series with the first conveyor belt 2, a second conveyor belt 3 for spacing is provided, which provides a horizontal plane 30, substantially coplanar with the mobile plane 20 of the first conveyor belt 2 and mobile in the same advancement direction as the first conveyor belt 2.

In particular, the first conveyor belt 2 and the second conveyor belt 3 are wound on relative return roller groups which give them a shape such that the respective mobile planes 20 and 30 are very close to one another, being separated by a distance that is significantly smaller than the dimensions of the rest base of a jar V (see figure 1).

Further, the first and second conveyor belts 2 and 3 are activated by powered rollers 21, and 31, which advance the belts 2 and 3 independently of and at different speeds from one another.

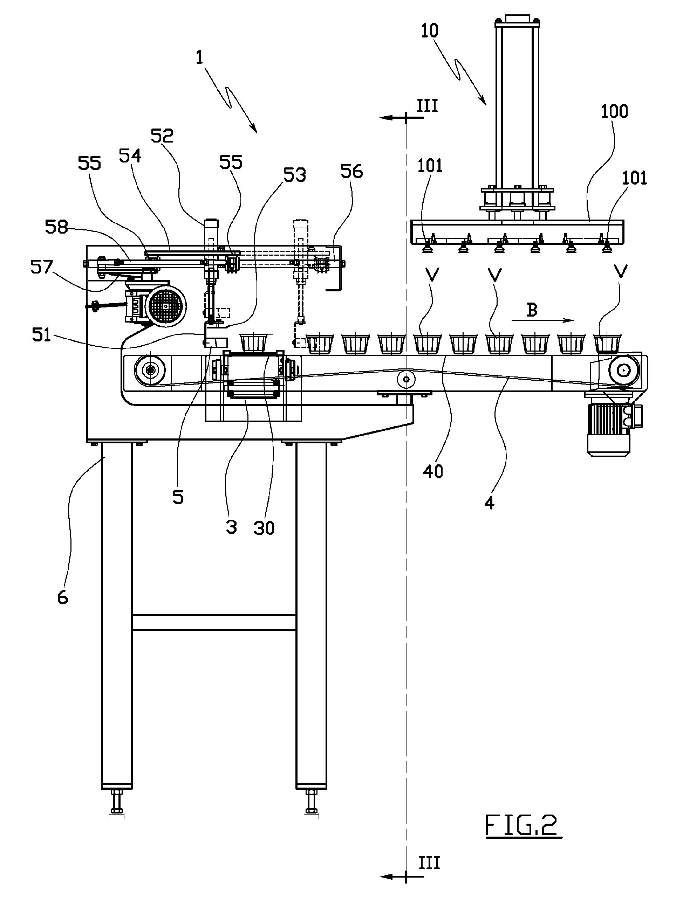

As illustrated in figures 1 and 2, the ordering machine 1 further comprises a third conveyor belt 4 for distancing, which is associated to the second belt 3 for spacing and is arranged transversally with respect thereto.

The third distancing conveyor belt 4 provides the already-mentioned service plane 40, which exhibits a width which is considerably greater than those of the mobile planes 20 and 30, and runs in an advancement direction B which is perpendicular to the advancement direction A of the first and second conveyor belts 2 and 3.

In the illustrated embodiment, the third distancing conveyor belt 4 is wound about a group of return rollers which confer on the belt 4 a shape such that it inserts internally of the shape of the second spacing belt 3, so that the service plane 40 runs below the mobile plane 30 of the second belt 3 (see figures 2 and 3).

In this way, the tract of mobile plane 30 which superposes the service plane 40 defines a transfer zone, from which the jars V located on the second spacing belt 3 are transferred onto the third distancing conveyor belt 4.

In particular, the transfer zone of the mobile plane 30 is located in direct contact with the service plane 40, so that the jars V which are transferred from one to another of the belts have to overcome a level difference equal only to the thickness of the second spacing belt 3.

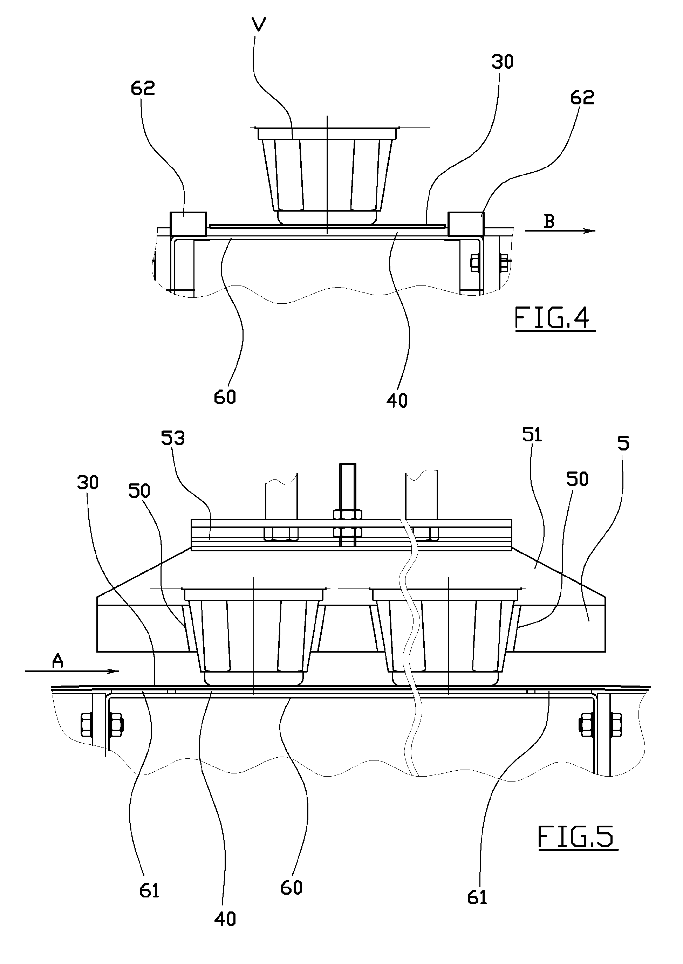

In more detail, at the transfer zone, the service plane 40 runs contactingly on a plate 60 fixed to the support frame 6 of the ordering machine 1 (see figures 4 and 5).

As illustrated in figure 5, two blocks 61 are positioned on the fixed plane 60, which two blocks 61 develop longitudinally along the opposite lateral sides of the service plane 40, in order to keep it correctly guided.

The mobile plane 30 of the second spacing belt 3 runs above the blocks 61, running over the service plane 40, and is guided by respective blocks which are also fixed to the fixed plate 60 and positioned on opposite sides along the lateral edges of the mobile plane 30 (see figure 4).

In this way, although the mobile plane 30 and the service plane 40 run in reciprocal contact along perpendicular directions, the guide blocks 61 and 62 effectively prevent the planes 30 and 40 from mutually displacing at the transfer zone.

To transfer the jars V from the spacer belt 3 to the distancing belt 4, the ordering machine 1 comprises a pusher organ 5 which is mobile above the transfer zone of the mobile plane 30.

In particular, the pusher organ 5 moves, alternatingly, in a horizontal direction which is parallel to the advancement direction B of the distancing belt 4.

In the illustrated example, the pusher organ 5 is constituted by a horizontal bar which develops parallel to the advancement direction A of the spacer belt 3, and which exhibits a shaped plan profile which affords a plurality of arched recesses 50.

Each recess 50 defines a housing which partially embraces a respective jar V in the transfer zone of the mobile plane 30; the recess 50 centres the jar's position and holds it laterally during the transfer onto the distancing belt 4.

As illustrated in figures 2 and 3, the pusher organ 5 is borne by a support bracket 51, which is fixed to the free ends of the mobile stems of a pair of jacks 52.

The jacks 52 are both positioned above the pusher organ 5, and are oriented vertically to enable raising and lowering of the pusher organ 5 with respect to the mobile plane 30 of the spacing belt 3.

The support bracket 51 also bears a thin horizontal holding plate 53, developing substantially along the whole length of the pusher organ 5, which is destined to be in contact with the tops of the jars V during the transfer thereof from the spacer belt 3 to the distancing belt 4 (see figure 2).

In particular, the holding plate 53 is connected to the support bracket 51 by threaded organs which enable the position of the holding plate 53 to be adjusted with respect to the pusher organ 5, in order to adapt the holding plate 53 to a height of the jars V, which can vary.

The jacks 52 are installed on board a mobile carriage 54, positioned higher than the pusher organ 5, which pusher organ 5 moves alternatingly in a horizontal direction which is parallel to the advancement direction B of the service plane 40.

In the illustrated embodiment, the mobile carriage 54 comprises a horizontal plate to which four annular skates 55 are fixed, which skates 55 are aligned in pairs and are slidably inserted on two distinct parallel guide rods 56.

The guide rods 56 are solidly constrained to the support frame 6 of the ordering machine 1, and are arranged parallel to the advancement direction B of the service plane 40.

As illustrated in figure 1, the mobile carriage 54 is activated in the alternating movement thereof by an ordinary crank mechanism which lies in a horizontal plane, below the carriage 54.

The crank mechanism comprises a crank 57 which rotates about a fixed vertical axis, powered by a motor, which crank 57 is hinged to the end of a con rod 58 an opposite end of which is hinged to the mobile carriage 54.

In use, the jars V are located resting on the mobile plane 20 of the first supply belt 2, where they are aligned along the advancement direction A and are arranged very close to one another, for example in reciprocal contact.

The mobile plane 20 advances the jars V at a predetermined speed along direction A, up until they are transferred one after another onto the mobile plane 30 of the second spacing belt 3.

The transfer is done safely and stably thanks to the small distance separating the mobile planes 20 and 30, respectively of the first supply belt 2 and the second spacer belt 3.

The spacer belt 3 runs at a faster speed than the supply belt 2, such that when passing onto the mobile plane 30, the jars V distance one from another by a predetermined amount which obviously depends on the difference between the belt advancement speeds.

As the mobile plane 30 advances, the equidistanced jars V are progressively brought into the transfer zone.

When the transfer zone is occupied by a complete line of jars V, the spacing belt 3 and the supply belt 2 stop simultaneously.

At this instant, the pusher organ 5 is in the retreated position, i.e. upstream of the jars V with respect to the advancement direction B of the service plane 40. Further, the pusher organ 5 is at a level from the mobile plane 30 such as to be facing the lateral sides of the jars V.

At this point, the mobile carriage 54 performs an advancing run, moving the pusher organ 5 against the jars V which are stationary in the transfer zone.

Then the pusher organ 5 contemporaneously pushes all the jars V of the line, such that the jars V exit sideways from the mobile plane 30 of the spacing belt 3, and move onto the service plane 40 of the distancing belt 4.

In particular, as the recesses 50 of the pusher organ 5 partially embrace the lateral sides of the jars V, the jars V cannot move reciprocally during the transfer, thus ensuring that the distance between them remains the same.

When the pusher organ 5 reaches the advance endrun, a whole line F of equidistanced jars V is located on the service plane 40, in a predetermined release position.

At this point, the third distancing belt 4 starts to run, causing the service plane 40 to advance by a certain distance, in order to distance the line F of jars V from the release zone. The distancing belt 4 then stops.

In particular, the distancing belt 4 advances by a constant quantity which is equal to a distance separating the jars V belonging to the line F.

In the meantime, the supply belt 2 and the spacing belt 3 restart to arranged a new line of jars V in the transfer zone of the mobile plane 30.

Then the jacks 52 raise the pusher organ 5 to a higher level with respect to the jars V and the mobile carriage 54 retreats.

In this way, the pusher organ 5 moves above the new jars V which are being positioned in the transfer zone, and newly reaches the retreated position.

Finally, the jacks 52 lower the pusher organ 5, and the cycle is repeated.

In this way, the service plane 40 is progressively filled with jars V which are ordered according to the desired matrix arrangement.

When the service plane 40 is full, a transporter device 10 intervenes, illustrated in figure 2, which collects the ordered jars V and transfers them rigidly internally of a storage container (not illustrated).

Schematically the transporter device 10 comprises a platform 100, mobile both horizontally and vertically, which bears a plurality of suckers 101, in plan view ordered in a matrix arrangement equal to the arrangement of the jars V on the service plane 40, each of which plurality of suckers 101 grips a respective jar V.

In this way, the platform 100 is positioned vertically above the service plane 40, and is lowered until the sucker devices 101 are in contact with the tops of the jars V, to grip them solidly.

Then the platform 100 is raised and displaced with respect to the service plane 40, up until the jars V are deposited in the storage container.

Obviously a technical expert in the sector might make numerous modifications of a practicaly-applicational nature to the ordering machine 1 as described herein, without its forsaking the sought ambit of protection for the inventive idea as claimed herein below.

## Claims

1. An ordering machine for ordering a group of homogeneous objects (V) in a matrix arrangement, comprising:
a first mobile plane (20) for supplying the group of objects (V) in sequence
a second mobile plane (30) which moves at a different velocity from the first plane and supports a line of the objects (V) in a transfer zone, and
a pusher organ (5), mobile and alternating in a perpendicular direction to the advancement direction (A) of the second mobile plane (30), which contemporaneously pushes all the objects (V) of the line onto
a third mobile plane (40) which slides in a perpendicular direction (B) to the advancement direction (A) of the second mobile plane (30),
**characterised in that** the pusher organ (5) comprises a plurality of housings (50), each of which housings (50) partially embraces a relative object (V) of the line of objects (V) located in the transfer zone.

2. The machine of claim 1, wherein the second mobile plane (30) is superposed on the third mobile plane (40) in the transfer zone.

3. The machine of claim 2, wherein the second mobile plane (30) and the third mobile plane (40) are in reciprocal contact in the transfer zone.

4. The machine of claim 1, wherein the second mobile plane (30) moves in the same advancement direction (A) as the first mobile plane (20).

5. The machine of claim 1, wherein the second mobile plane (30) is substantially coplanar to the first mobile plane (20).

6. The machine of claim 1, wherein the pusher organ comprises a bar (5) having a plan profile which affords a series of recesses (50), each of which recesses (50) defines one of the housings.

7. The machine of claim 6, wherein the profile of each of the recesses (50) is arched.

8. The machine of claim 1, wherein the pusher organ (5) is associated to means for elevating (52) which vertically displace the pusher organ (5), in order to vary a height thereof with respect to the second mobile plane (30).

9. The machine of claim 8, wherein the means for elevating (52) are interposed between the pusher organ (5) and a mobile carriage (54) associated to means for activating (57, 58), which means for activating (57, 58) move the mobile carriage (54) horizontally with an alternating motion along a perpendicular direction to the advancement direction (A) of the second mobile plane (30).

10. The machine of claim 9, wherein the means for activating comprise a crank mechanism (57, 58).

11. The machine of claim 9, wherein the mobile carriage (54) is located at a height from the second mobile plane (30) which is greater than a height of the pusher organ (5).

12. The machine of claim 9, wherein the means for elevating comprise at least a jack (52) fixed on board the mobile carriage (54).

13. The machine of claim 9, wherein the mobile carriage (54) is slidingly coupled to at least a pair of fixed guide rods (56), which guide rods (56) are arranged perpendicular to the advancement direction (A) of the second mobile plane (30).

14. The machine of claim 13, wherein the mobile carriage (54) comprises a plurality of annular skates (55) which run along the guide rods (56).

15. The machine of claim 1, wherein the first mobile plane (20), the second mobile plane (30) and the third mobile plane (40) are provided by respective conveyor belts (2, 3, 4).

16. The machine of claim 1, wherein at least a holding plate (53) is associated to the pusher organ (5), the at least a holding plate (53) being destined to stay in contact with tops of the objects (V) of the line of objects (V) to be transferred.

17. The machine of claim 16, wherein the stop element (53) is height-adjustable with respect to the pusher organ (5).
